# EUROPEAN PATENT APPLICATION

(11) **EP 1 708 299 A1**
(43) Date of publication of application: **04.10.2006**
(21) Application number: 05704208.7
(22) Date of filing: 21.01.2005
(51) Int. Cl.: H01M 4/86, H01M 8/10

(54) **CATHODE FOR FUEL CELL AND SOLID POLYMER FUEL CELL HAVING SAME**

(30) Priority: 22.01.2004 JP 2004014131
(71) Applicant: TOYOTA JIDOSHA KABUSHIKI KAISHA, Toyota-shi, Aichi-ken 471-8571 (JP)
(72) Inventor: KAWAMURA, Tetsuo, 1, Toyota-cho, Toyota-shi, Aichi 4718571 (JP)
(74) Representative: TBK-Patent
(86) International application number: PCT/JP2005/001155
(87) International publication number: WO 2005/071777

(57) **Abstract**

A fuel cell cathode comprises a catalyst layer comprised of a catalyst-supported electrically conducive carrier and a polymer electrolyte. The catalyst-supporting electrically conductive carrier further supports or has mixed therein a catalyst that is in contact with an oxygen absorbing/releasing material. The cathode has excellent electrode characteristics with respect to oxygen-reducing reactions. A polymer electrolyte fuel cell fitted with the cathode can provide high battery output.

## Description

### TECHNICAL FIELD

The present invention relates to a fuel cell cathode and a polymer electrolyte fuel cell having such fuel cell cathode.

### BACKGROUND ART

Polymer electrolyte fuel cells having a polymer electrolyte membrane can be easily reduced in size and weight. For this reason, there is a growing expectation for the practical application thereof as a power source for moving vehicles, such as electric vehicles, and for small-sized cogeneration systems. However, polymer electrolyte fuel cells have relatively low operation temperatures, and it is difficult to effectively utilize the resultant exhaust heat for auxiliary mobile power purposes or the like. Therefore, if the polymer electrolyte fuel cell is to be put to practical use, capabilities must be provided for obtaining high generation efficiency and high output density under operation conditions with high anode reaction gas (such as pure hydrogen, for example) and cathode gas (such as air, for example) utilization ratios.

Electrode reactions within each of the catalyst layers for the anode and cathode of a polymer electrolyte fuel cell proceed at a three-phase interface (to be hereafter referred to as a reaction site) where individual reactions gases, catalysts, and a fluorine-containing ion exchange resin (electrolyte) exist simultaneously. Accordingly, in the polymer electrolyte fuel cells, the catalyst layers are conventionally made of catalysts, such as metal catalysts or supported metal catalysts (such as metal-supporting carbon, for example, consisting of a carbon black carrier with a large specific surface area by which a metal catalyst, such as platinum, is supported) that are coated with the same or a different kind of fluorine-containing ion exchange resin as that of the polymer electrolyte membrane. This is to achieve the so-called three-dimensionalization of the reaction site within the catalyst layers so as to increase the size of the reaction site.

For the fluorine-containing ion-exchange resin for coating the catalyst, perfluorocarbon polymer (to be hereafter referred to as a sulfonic-acid perfluorocarbon polymer) having high ion conductivity and a sulfonic acid group that is chemically stable in oxidizing and reducing atmospheres, such as Nafion available from DuPont, is used.

However, although the fluorine-containing ion-exchange resin contained in the conventional cathode catalyst layer is superior in ion conductivity and chemical stability, it exhibits insufficient oxygen gas permeability in resin. As a result, oxygen permeability within the catalyst layer becomes insufficient and the overvoltage in the oxygen reduction reaction in the cathode becomes excessive, such that it is difficult to obtain excellent electrode characteristics.

JP Patent Publication (Kokai) No. 11-354129 A (1999) proposes a polymer electrolyte fuel cell in which a fluorine-containing ether compound is mixed into the fluorine-containing ion-exchange resin with which the catalyst is coated so as to increase oxygen permeability within the catalyst layer of the cathode, thereby reducing the overvoltage of the cathode.

However, even the polymer electrolyte fuel cell disclosed in JP Patent Publication (Kokai) No. 11-354129 A (1999) is lacking in terms of oxygen permeability within the catalyst layer of the cathode, such that the overvoltage of the cathode is not sufficiently reduced. Furthermore, the durability of the catalyst layer of the cathode is insufficient, resulting in the problem of reduced battery life. This is believed to be due to the fact that because the fluorine-containing ether compound, which is considered to be preferable, is a low-molecular weight compound in the form of oil, the compound gradually dissolves in reaction product water during generation of electricity, or it becomes separated from the fluorine-containing ion exchange resin during generation and is further discharged from the catalyst layer, together with the product water.

In response, JP Patent Publication (Kokai) No. 2002-252001 A discloses that the electrode characteristics of the cathode in particular are improved by mixing a polymer compound having high oxygen permeability and substantially no ion exchange group into the electrode catalyst layer of the fuel cell.

In yet another example, JP Patent Publication (Kokai) No. 8-173775 A (1996) discloses a battery comprising an oxygen permselective membrane formed of a dispersion liquid consisting of a solution of an oxygen transport carrier including a metal complex that specifically and reversibly binds to oxygen, thus mimicking hemoglobin in blood, the solution being dispersed in a hydrophobic medium in which carbon dioxide dissolves at a slow rate. A battery container has an air inlet in communication with the outside air, and a gas dispersion electrode is provided along the air inlet, the gas dispersion electrode using oxygen as an active material. The oxygen permselective membrane is disposed between the gas dispersion electrode and the air inlet.

An attempt to achieve higher battery performance is disclosed in JP Patent Publication (Kokai) No. 10-55807 A (1998), in which an auxiliary catalyst such as cerium oxide is added to the electrode catalyst so as to improve the air utilization ratio. Another attempt to promote the cathode reaction is disclosed in JP Patent Publication (Kokai) No. 2003-100308 (A) in which cerium oxide is supported by a platinum-supporting carrier so as to increase the rate of reduction of oxygen. Furthermore, an attempt to enhance battery performance is also disclosed in Journal of Power Sources 115 (2003) 40-43 in which CeZrOₓ is physically mixed into Pt/C catalyst layer so as to increase the air utilization ratio.

### DISCLOSURE OF THE INVENTION

When an oxygen permeable resin is formed by mixing catalyst-supported carbon and an electrolyte during the preparation of a catalyst as in JP Patent Publication (Kokai) No. 2002-252001 A, the oxygen permeable resin is dispersed throughout the electrode. As a result, if the product water increases, it becomes difficult to guide oxygen to locations near the surface of the catalyst. In other words, the problem is that the product water drainage path and the oxygen diffusion path are located at the same place. Within the electrode, the electrode reaction proceeds at the three-phase interface, where the reaction gas, catalysts, and electrolyte meet. One of important issues is the feeding of oxygen to the three-phase interface. In JP Patent Publication (Kokai) No. 2002-252001 A, the efficiency of reaction is improved by physically mixing a polymer having a high oxygen permeation coefficient with electrolyte and catalysts. However, what oxygen actually needs is the three-phase interface, and it is impossible for a simple physical mixture to allow a highly oxygen-permeable polymer to exist near the three-phase interface in a concentrated manner. The result is that the performance of the high oxygen permeability material cannot be fully exploited. This indicates that there has been not enough analysis regarding the fact that the electrode reaction takes place at the three-phase interface.

In the case of the battery according to JP Patent Publication (Kokai) No. 8-173775 A (1996), where merely the oxygen permselective membrane is disposed between the gas diffusion electrode and the air inlet, oxygen does not directly diffuse into the catalyst. As a result, the catalytic activity cannot be fully enhanced.

In view of the foregoing problems of the prior art, it is therefore an object of the invention to provide a cathode with excellent electrode characteristics with respect to oxygen reducing reactions, and a polymer electrolyte fuel cell comprising such a cathode and capable of producing high battery output.

The invention is based on the realization that the aforementioned problems can be solved by providing a path made of a specific material via which oxygen molecules can be diffused over carbon.

In one aspect, the invention provides a fuel cell cathode comprising a catalyst layer that comprises a catalyst-supporting electrically conductive carrier and a polymer electrolyte, wherein a catalyst is additionally supported by or mixed with the catalyst-supporting electrically conductive carrier, the catalyst being in contact with an oxygen absorbing/releasing material.

In accordance with the cathode of the invention, a catalyst is supported by the conductive carrier while at the same time an oxygen absorbing/releasing material that is in contact with the catalyst is further supported by or mixed with the conductive carrier. Due to the oxygen absorbing/releasing material with which the catalyst is in contact, an oxygen-molecule diffusion path to the surface of the catalyst can be ensured, so that the concentration of the reaction gas in the vicinity of the reaction site in the catalyst layer can be increased as compared with prior art. As a result, the exchange current density in the electrode reaction can be increased, whereby oxygen overvoltage can be reduced; namely, better electrode characteristics can be obtained. Particularly, when the cathode is used as a cathode for a polymer electrolyte fuel cell, the overvoltage of the oxygen reduction reaction in the cathode can be effectively reduced, so that the electrode characteristics of the cathode can be enhanced. While a lack of oxygen gas occurs particularly during the operation of the battery, excellent electrode characteristics can be maintained by the invention even during long hours of operation.

In a fuel cell in which air is used as the oxidant, the presence of nitrogen could be a cause for preventing the electrode reaction. In accordance with the invention, an oxygen absorbing/releasing material that is in contact with the catalyst is further supported, so that diffusion of nitrogen gas can be prevented, a high oxygen concentration can be realized in the vicinity of the electrode, and enhanced battery performance can be achieved.

The oxygen absorbing/releasing material herein refers to a material capable of reversibly absorbing and releasing oxygen. A variety of such materials are known and can be used with the invention.

The oxygen absorbing/releasing material used in the invention is a metal or metal oxide capable of repeating the absorption and release of oxygen based on the variation of the nearby oxygen concentration. Specifically, it is an oxide capable of absorbing oxygen in an oxidizing atmosphere with a relatively high O₂ concentration and releasing oxygen in a reducing atmosphere with a relatively low O₂ concentration.

More specifically, the oxygen absorbing/releasing material comprises an oxidation-number-variable metal oxide that absorbs and releases oxygen based on a change in the oxidation number. Examples include Ti, V, Cr, Mn, Fe, Co, Ni, Cu, Nb, Mo, Ta, W, Ce, Pr, and Nd metal, and oxides thereof. Of these, oxides of Mn, Fe, Co, and Ni are preferable. It is also possible to use a basic oxide that absorbs and releases oxygen based on the adsorption of oxygen. Such examples include Zr, Y, alkaline metals, and oxides of alkaline earth metals. More specific examples are one or more selected from CeO₂, CeO₂-ZrO₂, CeO₂-ZrO₂-Y₂O₃, or CeO₂-ZrO₂-rare-earth oxide. The oxygen absorbing/releasing material, however, is not limited to any of these materials.

In the invention, the amount of the oxygen absorbing/releasing material in the catalyst layer is preferably 5 to 16 wt.% relative to the entire amount of the catalyst layer. The total amount of the catalyst supported by the catalyst layer is preferably 30 wt.% or less. By thus selecting a range in which high catalytic activity can be obtained, the amounts of noble metals, such as platinum, that are used can be reduced. As will be mentioned later, cell voltages equivalent to those of conventional products can be obtained even when the amount of platinum used in the invention is reduced by half.

In the invention, the average particle size of the oxygen absorbing/releasing material is preferably 2 nm to 40 nm and most preferably 2 nm to 5 nm. By having the oxygen absorbing/releasing material with an average particle size of 2 nm to 40 nm supported by the carrier in a highly dispersed manner, enhanced battery performance (generation efficiency) can be obtained in the low-current density side as compared with a case where the oxygen absorbing/releasing material with an average particle size on the micrometer order is used.

Preferably, the oxygen absorbing/releasing material is comprised of one or more of CeO₂, CeO₂-ZrO₂, CeO₂-ZrO₂-Y₂O₃, or CeO₂-ZrO₂-rare-earth oxide, of which CeO₂ has been partly reduced to Ce₂O₃. The reduction process preferably involves a reducing gas, such as hydrogen, or a reducing liquid, such as hydrazine. By mixing Ce₂O₃ obtained by the partial reducing-pretreatment of CeO₂ into the electrode, enhanced battery performance (generation efficiency) was obtained on the low-current density side as compared with an electrode into which an oxygen absorbing/releasing material alone was mixed.

Preferably, the ratio of the amount of the polymer electrolyte to the amount of the carrier in the catalyst layer (N/C) is 0.8 or less and most preferably between 0.8 and 0.7. In the invention, a new problem was noted, in that although the battery performance (generation efficiency) can be improved on the low-current side, flooding is caused on the high-current density side due to the hydrophilicity of the oxygen absorbing/releasing material, resulting in an inability to achieve desired battery performance (generation efficiency). By setting the ratio of the amount of polymer electrolyte to the amount of carrier (N/C) to be 0.8 or less, such flooding can be suppressed and enhanced battery performance (generation efficiency) can be achieved throughout all current density regions.

Preferably, the carrier is comprised of carbon that has been treated to be hydrophobic. By using carbon that has been treated to be hydrophobic as the carrier, flooding can be suppressed and enhanced battery performance (generation efficiency) can be achieved throughout all current density regions.

Preferably, the pore volume of the catalyst layer is increased by treating a catalyst ink, of which the catalyst layer is made, such that the number of pores therein is increased. A preferable example of the pore-increasing process involves stirring with a ultrasound homogenizer. Preferably, the pore-increasing process is such that the pore volume (cc/g) of the catalyst layer as measured by the nitrogen pore distribution method is increased to as much as 1.4 to 1.8 times the pore volume of a conventional catalyst layer. By thus increasing the pore volume of the catalyst layer by the pore-increasing process, enhanced battery performance (generation efficiency) can be achieved throughout all current density regions.

Preferably, more of the oxygen absorbing/releasing material is contained towards the electrolyte membrane side in the catalyst layer than towards the diffusion layer side, and less of the oxygen absorbing/releasing material is contained towards the diffusion layer side than towards the electrolyte membrane side, or none at all is contained in such location. Specifically, the oxygen absorbing/releasing material may be disposed diagonally, or it may be have a dual-layer structure consisting of a layer that contains an oxygen absorbing/releasing material and a layer that does not contain any oxygen absorbing/releasing material. By thus providing a variation in the way the oxygen absorbing/releasing material is disposed, excess oxygen fed from the outside can be trapped by the oxygen absorbing/releasing material on the electrolyte membrane side and released and fed to the catalyst when the oxygen consumption by the catalyst increases, whereby the oxygen utilization efficiency of the catalyst can be improved. As a result, flooding on the high-current density side can be suppressed, and enhanced battery performance (generation efficiency) can be achieved throughout all current density regions.

Because the oxygen absorbing/releasing material of the invention is substantially insoluble to aqueous media, such as water or alcohol, problems such as the oxygen absorbing/releasing material being separated from the surface of the conductor and discharged from the catalyst layer during a long period of operation can be sufficiently prevented. As a result, the gas diffusion electrode of the invention can provide stable electrode characteristics over a long period of time.

Preferably, the conductive carrier having the catalyst and oxygen absorbing/releasing material supported on the surface thereof or mixed therein is a carbon powder or a fibrous carbon material.

In a second aspect, the invention provides a polymer electrolyte fuel cell comprising an anode, a cathode, and a polymer electrolyte membrane disposed between the anode and the cathode, the cathode comprising the above-described fuel cell cathode.

By thus utilizing the above-described cathode of the invention that has excellent electrode characteristics with respect to oxygen reducing reactions, a polymer electrolyte fuel cell having high battery output can be provided. Furthermore, as mentioned above, the cathode of the invention is capable of sufficiently preventing flooding and has superior durability, and the polymer electrolyte fuel cell of the invention having the cathode can provide high battery output stably over a long period of time.

In a third aspect, the invention provides a method of operating a polymer electrolyte fuel cell comprising an anode, a cathode, and a polymer electrolyte membrane disposed between the anode and the cathode. The cathode comprises the above-described fuel cell cathode. The method comprises feeding hydrogen gas to the oxygen absorbing/releasing material, which is comprised of one or more of CeO₂, CeO₂-ZrO₂, CeO₂-ZrO₂-Y₂O₃, CeO₂-ZrO₂-rare-earth oxide, periodically and in a pulsed manner before or during operation so as to treat CeO₂ to be partly reduced to Ce₂O₃. By thus reducing part of CeO₂ to Ce₂O₃, enhanced battery performance (generation efficiency) can be achieved throughout all current density regions as compared with a case where no reduction process is carried out at regular intervals before and/or during operation.

In a system whereby hydrogen is circulated in a pulsed manner to the cathode into which the oxygen absorbing/releasing material is mixed, accumulation of product water can be suppressed and flooding can be reduced. As a result, high performance can be provided throughout all current density regions.

The expression "in a pulsed manner" herein means that hydrogen gas, which is a reducing gas, is fed once for several seconds every several minutes before and/or during the operation of the fuel cell.

When hydrogen is circulated to the cathode in a pulsed manner, the amount of hydrogen must not be more than 4.2%, which is the explosion limit.

### BRIEF DESCRIPTION OF THE DRAWINGS

Fig. 1 shows a conceptual chart of the catalyst electrode reaction at the cathode in prior art (1). Fig. 1A shows the reaction at the initial phase thereof, or when the output is low. Fig. 1B shows the reaction when the output has increased.
Fig. 2 shows a conceptual chart of the catalyst electrode reaction at the cathode in prior art (2).
Fig. 3 shows a conceptual chart of the catalyst electrode reaction at the cathode in a cathode according to the invention.
Fig. 4 shows voltage-current density curves for Example 1-1 and Comparative Example l-l.
Fig. 5 shows cell voltages for Example 2-1 and Comparative Examples 2-1 and 2-2 when the film thickness is varied.
Fig. 6 shows cell voltages for Example 2-2 and Comparative Examples 2-1 and 2-2 when the platinum-catalyst supported density is changed.
Fig. 7 shows a conceptual chart of a system whereby H₂ is circulated at regular intervals before or during operation.

### BEST MODE FOR CARRYING OUT THE INVENTION

The invention will be hereafter described in detail with reference to preferred embodiments of a cathode and a polymer electrolyte fuel cell having the same.

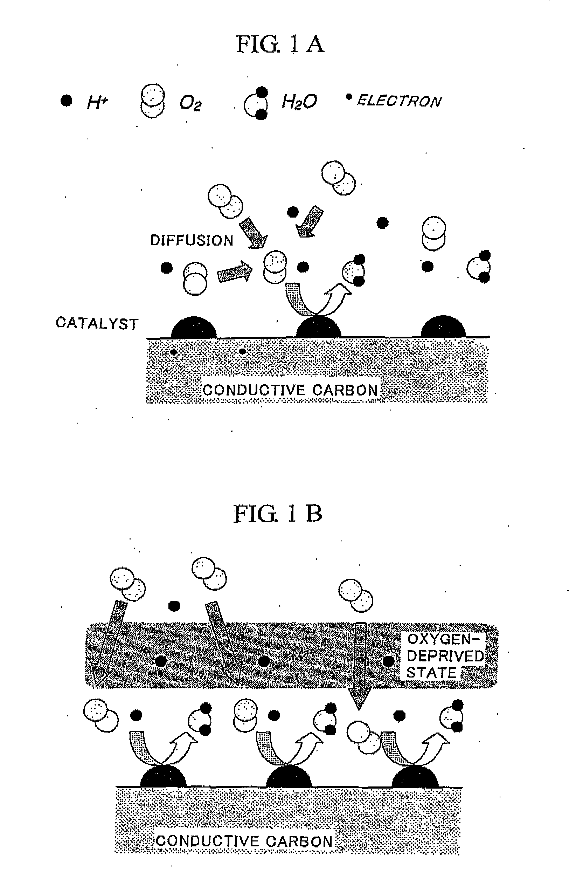

Fig. 1 shows a conceptual chart of a catalyst electrode reaction at a cathode in a conventional example (1). Fig. 1(A) shows the reaction in the initial phase or when the output is low, where not much oxygen is required and therefore the feeding of oxygen in the vicinity of the catalyst is maintained by normal diffusion. Specifically, the oxygen molecules that have diffused in the vicinity of the catalyst react with protons and electrons in accordance with the following expression, thereby producing water molecules:

O₂ + 4H⁺ + 4e⁻ → 2H₂O

Fig. 1B shows the' reaction when the output has increased. In this case, much oxygen is consumed, and therefore the oxygen partial pressure near the catalyst drops significantly. In order for a reaction to take place, the next instance of diffusion of oxygen must be awaited, leading to a drop in generation characteristics.

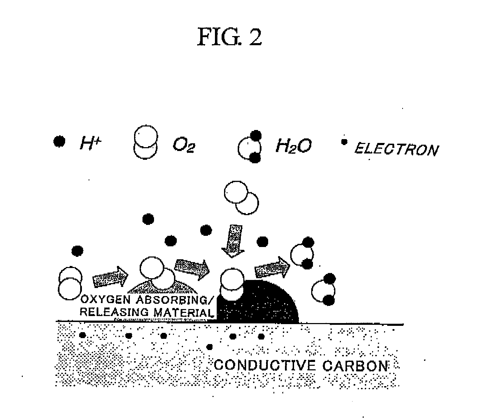

Fig. 2 shows a conceptual chart of the catalyst electrode reaction at the cathode in an example of conventional art (2). Near electrically conductive carbon that supports a catalyst, an oxygen absorbing/releasing material, such as CeO₂, is also supported by the conductive carbon. When the fuel cell is operated in a low output region, the amount of oxygen consumed at the catalyst is small and the oxygen concentration in the vicinity of the oxygen absorbing/releasing material is high, such that excess oxygen is stored in the oxygen absorbing/releasing material. On the other hand, when the fuel cell is operated with high output, the oxygen consumption amount at the catalyst is large and the oxygen concentration near the oxygen absorbing/releasing material becomes low, resulting in oxygen being released from the oxygen absorbing/releasing material. The thus released oxygen is reduced over the catalyst, whereby the fuel cell performance can be further enhanced. Thus, because of the release of oxygen from near the Pt electrode catalyst, oxygen can be fed to the Pt catalyst without being influenced by the gas diffusion in the catalyst layer, so that the output of the fuel cell can be increased.

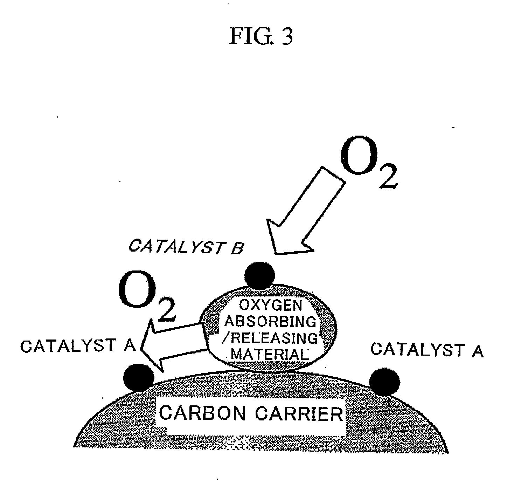

Fig. 3 shows a conceptual chart of the catalyst electrode reaction at the cathode according to the invention. In the vicinity of conductive carbon that supports a catalyst A, an oxygen absorbing/releasing material, such as CeO₂, is also carried by the conductive carbon. Catalyst B is in contact with the oxygen absorbing/releasing material. Catalyst A produces the following cathode reaction:

O₂ + 4H⁺ + 4e⁻ → 2H₂O

Catalyst B promotes the absorption and release of oxygen from the oxygen absorbing/releasing material. In this way, when the fuel cell is being operated in low output regions, the oxygen consumption amount at the catalyst is small and the oxygen concentration in the vicinity of the oxygen absorbing/releasing material is high, such that excess oxygen can be efficiently stored in the oxygen absorbing/releasing material. On the other hand, when the fuel cell is being operated in high output regions, the oxygen consumption amount at the catalyst is large and the oxygen concentration near the oxygen absorbing/releasing material becomes low, such that oxygen can be efficiently released from the oxygen absorbing/releasing material. The oxygen thus released is reduced over the electrode, whereby the fuel cell performance can be further enhanced. Thus, as oxygen can be released from near the Pt electrode catalyst, oxygen can be fed to the Pt catalyst without being influenced by the gas diffusion in the catalyst layer, so that the output of the battery can be increased.

Elcetrode reaction proceeds at the site referred to as the three-phase interface where the reaction gas, catalyst, and electrolyte meet. One of the important issues is the feeding of oxygen to the three-phase interface. When the output of the battery is increased, much more oxygen is required by the reaction, and the generation characteristics quickly deteriorate unless oxygen is available near the catalyst. In an example of prior art, this is countered by feeding highly concentrated oxygen. However, as shown in Fig. 1, because the actual reaction takes place at the three-phase interface (nearer the catalyst), the advantage of the highly concentrated oxygen cannot be fully utilized unless oxygen is fed to this location. Particularly when the output is increased, while the oxygen consumption amount over the catalyst surface increases, the rate of diffusion of oxygen from the outside to the catalyst surface hardly changes. For this reason, if the rate of consumption of oxygen at the catalyst surface of a certain size exceeds the rate of supply of oxygen to the catalyst surface, the generation characteristics decline due to lack of oxygen in the vicinity of the catalyst. In contrast, in accordance with the invention as shown in Fig.2, the rate of feeding of oxygen to the catalyst surface is increased so as to prevent the decline in generation characteristics due to lack of oxygen near the catalyst.

A cathode of a polymer electrolyte fuel cell of the invention comprises a catalyst layer. Preferably, it comprises a catalyst layer and a gas diffusion layer disposed adjacent to the catalyst layer. The gas diffusion layer is made of a porous material with electrical conductivity (such as carbon cloth or carbon paper, for example).

An oxygen absorbing/releasing material is present in the catalyst layer of the cathode, which is used to reduce overvoltage at the cathode with respect to the oxygen reducing reaction so as to increase the rate of electrode reaction at the cathode.

The content of the oxygen absorbing/releasing material contained in the catalyst layer is preferably 0.1% to 50% and more preferably 1% to 40% by mass relative to the total amount of a catalyst-supporting conductor and a polymer electrolyte. If the content of the oxygen absorbing/releasing material is less than 0.1% by mass, it tends to become difficult to sufficiently reduce the oxygen overvoltage with respect to the oxygen reducing reaction. On the other hand, if the content of the oxygen absorbing/releasing material exceeds 50% by mass, the relative content of a fluorine-containing ion exchange resin contained in the catalyst layer decreases. As a result, the number of reaction sites that can effectively function in the catalyst layer decreases and it becomes difficult to obtain excellent electrode characteristics.

The catalyst contained in the catalyst-supporting conductor of the cathode of the invention is not particularly limited but it preferably comprises platinum or a platinum alloy. Further preferably, the catalyst contained in the catalyst-supporting conductor is supported by an electrically conductive carrier, which is not particularly limited but is preferably made of carbon material with a specific surface area of 200 m²/g or more. Preferable examples include carbon black and activated charcoal.

The polymer electrolyte contained in the catalyst layer of the invention is preferably a fluorine-containing ion exchange resin, particularly a sulfonic acid-type perfluorocarbon polymer, which can remain chemically stable within the cathode and enables fast proton conduction.

The layer thickness of the catalyst layer of the cathode of the invention may be on the same order as those of conventional gas diffusion electrodes. Preferably, it is 1 to 100 µm and more preferably 3 to 50 µm.

In the polymer electrolyte fuel cell, the overvoltage of the oxygen reducing reaction at the cathode is normally far greater than the overvoltage of the hydrogen oxidizing reaction at the anode. Therefore, by increasing the oxygen concentration near the reaction site in the catalyst layer of the cathode, as described above, the reaction site can be effectively utilized and the electrode characteristics of the cathode can be improved. Consequently, the output characteristics of the battery can be effectively enhanced.

On the other hand, the structure of the anode is not particularly limited and it may have the structure of any conventional gas diffusion electrode, for example.

Furthermore, the polymer electrolyte membrane used in the polymer electrolyte fuel cell of the invention is not particularly limited and may be comprised of any ion exchange membrane as long as it exhibits good ion conductivity in wet conditions. Examples of the solid polymer material of which the polymer electrolyte membrane is formed include perfluorocarbon polymer having a sulfonic acid group, polysulfone resin, and perfluorocarbon polymer having a phosphonic acid group or a carbonic acid group. Among those, sulfonic acid-type perfluorocarbon polymer is preferable. The polymer electrolyte membrane may be made of the same or a different resin from that of the fluorine-containing ion exchange resin contained in the catalyst layer.

The catalyst layer of the cathode of the present invention can be prepared using a conductive carrier by which a catalyst and an oxygen absorbing/releasing material are supported in advance, and a coating solution consisting of a medium or dispersion medium in which a polymer electrolyte is dissolved or dispersed. It can also be prepared using a coating solution consisting of a medium or dispersion medium in which a catalyst-supported conductive carrier, a polymer electrolyte, and an oxygen absorbing/releasing material are dissolved or dispersed. Examples of the medium or dispersion medium used include alcohol, fluorine-containing alcohol, and fluorine-containing ether. A catalyst layer can be formed by coating a carbon cloth or the like that forms an ion exchange membrane or a gas diffusion layer with the coating solution. The catalyst layer can also be formed on an ion exchange membrane by forming a coated layer on a separately provided substrate by coating it with the coating solution, and then transferring the coated layer onto the ion exchange membrane.

When the catalyst layer is formed on the gas diffusion layer, the catalyst layer and the ion exchange membrane are preferably joined by an adhesive method or a hot press method, for example. When the catalyst layer is formed on the ion exchange membrane, the cathode may be formed solely of the catalyst layer, or it may additionally comprise a gas diffusion layer disposed adjacent to the catalyst layer.

Outside the cathode, there is disposed a separator in which normally gas channels are formed, via which gas containing hydrogen and gas containing oxygen are fed to the anode and the cathode, respectively, thereby completing the polymer electrolyte fuel cell.

In the following, the cathode and the polymer electrolyte fuel cell according to the invention are described in greater detail with reference to examples and comparative examples.

### [Example 1]

### (Example 1)

A CeO₂-ZrO₂ complex oxide was used as an oxygen absorbing/releasing agent. Printex XE2B was used as the carbon material, and for the platinum material, chloroplatinic acid was caused to be supported by the carbon by impregnation. A CeO₂-ZrO₂ complex oxide (20 wt.%) that supported 5 wt.% of Pt was mixed with the platinum-supported carbon, thereby preparing a catalyst.

### (Comparative example 1)

A catalyst was prepared in the same way as in Example 1 except for the absence of the addition of the CeO₂-ZrO₂ complex oxide.

### [Evaluation of catalytic activity]

An electricity generation evaluation test was conducted using a single cell with an electrode area of 12.96 cm² in the following manner.
- (Gas flow rate): Anode: H₂ 500 cc/min
Cathode: air 300 cc/min
- (Humidification temperature): Anode bubbling: 75°C
Cathode bubbling: 60°C
- (Cathode membrane thickness): 6 mil
- (Pressure): Anode: 0.2 MPa
Cathode: 0.2 MPa
- (Cell temperature):: 80°C

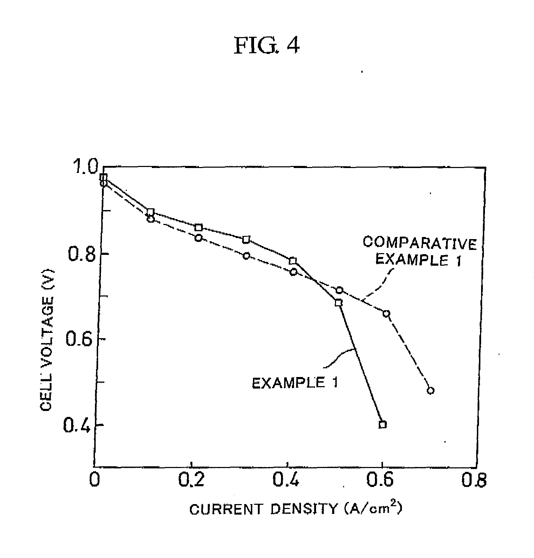

Fig. 4 shows the results of evaluation, which indicate that the fuel cell of the invention employing an electrode that supports the oxygen absorbing/releasing material that is in contact with the catalyst is superior to the comparative example employing an electrode that does not support the oxygen absorbing/releasing material in terms of electricity generating performance in low-current density regions.

### [Example 2]

### (Example 2-1)

An electrode with a membrane thickness of 3 mil comprising a PtFe(60 wt.%)-supported carbon catalyst mixed with a Pt(5 wt.%)-supported Ce-Zr-Oₓ powder (20 wt.%) was prepared in the following procedure.
(1) A Ce-Zr-Oₓ complex oxide powder was immersed in an aqueous solution of dinitrodiamine Pt complex, stirred, and then evaporated at 120°C to dryness (5 wt.% of Pt contained relative to the powder).
(2) After grinding in a mortar, the powder was baked in an atmospheric baking furnace at 500°C for 2 hours, and the powder was again ground in a mortar.
(3) A commercially available PtFe(60 wt.%)-supported carbon catalyst was mixed with predetermined amounts of ion-exchanged water, a Pt 5 wt.%-supported Ce-Zr-Oₓ powder (20 wt.% relative to catalyst), an electrolyte solution (Nafion), ethanol, and propylene glycol to obtain a catalyst ink.
(4) After stirring the catalyst ink using an ultrasound homogenizer for 30 minutes, stirring was carried out using a magnetic stirrer for 15 minutes, and this was repeated 3 times.
(5) The catalyst ink was cast on a teflon resin membrane (with a membrane thickness of 3 mil), which was then dried and cut into a 13-cm² section.
(6) The membrane section was hot-pressed on an electrolyte membrane to prepare an MEA.
(7) The MEA was assembled into a cell and then evaluated in the same way as in Example 1.

### (Example 2-2)

An electrode with a membrane thickness of 6 mil comprising a PtFe(30 wt.%)-supported carbon catalyst mixed with a Pt(5 wt.%)-supported Ce-Zr-Oₓ powder (20 wt.%) was prepared. This example is similar to Example 2-1 except for the substitution of a PtFe(30 wt.%)-supported carbon catalyst in step (3) and for the use of a membrane thickness of 6 mil in step (5).

### (Comparative Example 2-1)

An electrode with a membrane thickness of 6 mil comprising a PtFe(60 wt.%)-supported carbon catalyst was prepared.

### (Comparative Example 2-2)

An electrode with a membrane thickness of 4 mil comprising a PtFe(60 wt.%)-supported carbon catalyst mixed with a Pt(5 wt.%)-supported Ce-Zr-Oₓ powder (10 wt.%) was prepared.

### (Comparative Example 2-3)

An electrode with a membrane thickness of 4 mil comprising a PtFe(60 wt.%)-supported carbon catalyst mixed with a Pt(5 wt.%)-supported Ce-Zr-Oₓ powder (30 wt.%) was prepared.

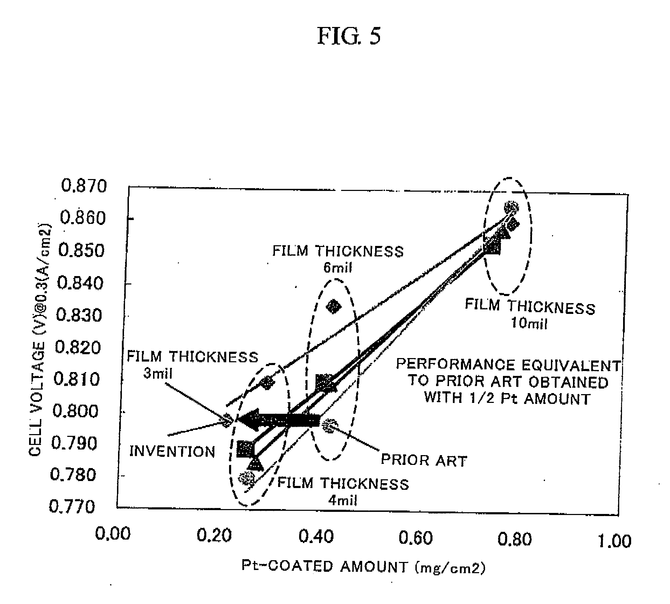

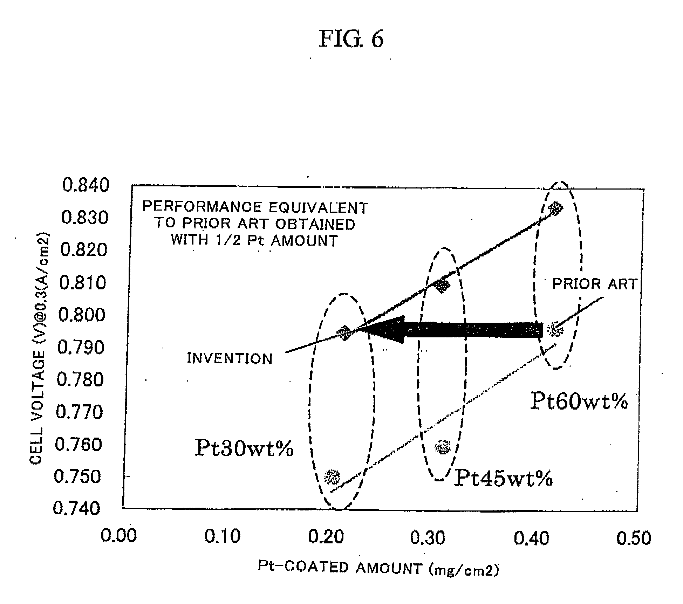

Results are shown in Figs. 5 and 6, from which it can be seen that: (1) the electrode of the invention has higher generation activity than the electrodes of the Comparative Examples; and (2) cell voltages equivalent to those of the conventional products can be generated with half the amount of platinum used. Thus, the amount of precious metals, such as platinum, used can be reduced, thereby contributing to the reduction of the cost of fuel cells.

### [Example 3]

### (Example 3)

An electrode comprising a PtFe(60 wt.%)-supported carbon catalyst by which a Ce-Zr-Oₓ powder (20 wt.%) was supported in a highly dispersed manner was prepared in the following procedure.
(1) Predetermined amounts of reagents cerium nitrate and zirconium nitrate were dissolved in ion-exchanged water. (The dissolved amounts were such that the concentration of the Ce-Zr-Oₓ powder relative to the PtFe(60 wt.%)-supported carbon was approximately 20 wt.%).
(2) A commercially available PtFe (60 wt.%)-supported carbon catalyst was suspended, and a reducing agent (such as an aqueous solution of sodium hydroxide) was added dropwise, thereby causing the hydroxides of cerium, zirconium, and yttrium to be supported by the carbon.
(3) After drying a powder obtained by washing filtration in a vacuum drying furnace at 120°C, the powder was left to stand in the atmosphere for 24 hours.
(4) The powder was treated in an inert gas at 500°C for 2 hours.
(5) The powder obtained in step (4) was mixed with predetermined amounts of ion-exchanged water, an electrolyte solution (Nafion), ethanol, and propylene glycol, thereby preparing a catalyst ink. (The amount of Nafion was adjusted such that N/C = 1 (by weight)).
(6) The catalyst ink was stirred with a ultrasound homogenizer for 30 minutes, followed by stirring with a magnetic stirrer for 15 minutes. The process was repeated three times.
(7) The catalyst ink was cast on a teflon resin membrane (with a membrane thickness of 3 mil), which was then dried and cut into a 13-cm² section.
(8) The membrane section was hot-pressed onto an electrolyte membrane so as to prepare an MEA.
(9) The MEA was assembled into a cell and then evaluated in the same manner as in Example 1.

Steps (2) to (4) involve operations to produce catalyst particles with sizes on the nanometer order. A TEM observation confirmed that the average particle size of the catalyst was 10 nm.

### (Comparative Example 3-1)

An electrode comprising a Pt (60 wt.%)-supported carbon physically mixed with a Pt(5 wt.%)-supported Ce-Zr-Oₓ powder (20 wt.%) was prepared.
(1) A Ce-Zr-Ox complex oxide powder was immersed in an aqueous solution of dinitrodiamine Pt complex and stirred. The resultant was then evaporated at 120°C to dryness (a powder containing 5 wt.% Pt).
(2) After grinding in a mortar, the powder was then baked at 500°C for 2 hours in an atmospheric baking furnace, and the resultant powder was again ground in a mortar.
(3) A commercially available PtFe (60 wt.%)-supported carbon catalyst was mixed with predetermined amounts of ion-exchanged water, a Pt(5 wt.%)-supported Ce-Zr-Oₓ powder (20 wt.% relative to the catalyst), an electrolyte solution (Nafion), ethanol, and propylene glycol, thereby preparing a catalyst ink.
(4) Step (6) and the subsequent steps of Example 3 were carried out.

### (Comparative Example 3-2)

A PtFe(60 wt.%)-supported carbon catalyst was used.

The procedure of Comparative Example 3-1 was performed except that Steps (1) and (2) were dispcnsed with and the Ce-Zr-Oₓ powder was not added.

A TEM observation confirmed that the average particle size of Comparative Examples 3-1 and 3-2 was 2 to 5 µm.

Table 1 below shows the composition of each catalyst. Table 2 shows the results of activity evaluation.

**Table 1**

| Data No. | Sample | Pt(A) | Fe | C | Nafion | Pt(B) | CeZrOₓ |
|---|---|---|---|---|---|---|---|
| Ex.3 | CeZrOₓ(20wt%)-supported | | | | | | |
| | PtFe(60wt%)/C | | | | | | |
| | N/C=1 | 19.4 | 1.6 | 34.0 | 34.0 | 0.0 | 11.0 |
| Com. Ex. 3-1 | PtFe(60wt%)+Pt(5wt%)/CeZr | | | | | | |
| | Oₓ(20wt%) | | | | | | |
| | N/C=1 | 19.3 | 1.6 | 33.8 | 33.8 | 0.5 | 10.9 |
| Com. Ex. 3-2 | | | | | | | |
| | PtFe(60wt%) | | | | | | |
| | N/C=1 | 21.8 | 1.8 | 38.2 | 38.2 | 0.0 | 0.0 |

**Table 2**

| Data No. | Sample | Current density (A/cm²) | | | | | | | |
|---|---|---|---|---|---|---|---|---|---|
| | | 0 | 0.1 | 0.2 | 0.3 | 0.4 | 0.5 | 0.6 | 0.7 |
| Ex.3 | CeZrOₓ(20wt%)-su pported PtFe(60wt%)/C | Cell voltage (V) | | | | | | | |
| | | | | | | | | | |
| | N/C=1 | 0.975 | 0.910 | 0.880 | 0.840 | 0.780 | 0.670 | 0.320 | |
| Com. Ex.3-1 | PtFe(60wt%)+Pt(5 wt%)/CeZrOₓ(20wt %) | | | | | | | | |
| | N/C=1 | 0.974 | 0.897 | 0.862 | 0.834 | 0.784 | 0.685 | 0.400 | |
| Com. Ex.3-2 | PtFe(60wt%) | | | | | | | | |
| | N/C=1 | 0.961 | 0.881 | 0.839 | 0.797 | 0.758 | 0.716 | 0.662 | 0.481 |

The results shown in Table 2 indicate that higher battery performance (generation efficiency) can be obtained on the low-current density side when an oxygen absorbing/releasing material with an average particle size of 2 to 40 nm is supported on a carrier in a highly dispersed manner than when the average particle size of the oxygen absorbing/releasing material is on the micrometer order.

### [Example 4]

### (Example 4)

An electrode comprising a PtFe(60 wt.%)-supported carbon mixed with a hydrogen-reduced Pt(5 wt.%)-supported Ce-Zr-Oₓ powder (20 wt.%) was prepared in accordance with the following procedure.
(1) A Ce-Zr-Oₓ complex oxide powder was immersed in an aqueous solution of dinitrodiamine Pt complex, stirred, and then evaporated to dryness at 120°C (5 wt.% Pt relative to said powder).
(2) After grinding in a mortar, the powder was baked in an atmospheric baking furnace at 500°C for 2 hours, and the powder was again ground in a mortar.
(3) The powder was treated in a hydrogen atmosphere at 350°C for 2 hours.
(4) A commercially available PtFe(60 wt.%)-supported carbon catalyst was mixed with predetermined amounts of ion-exchanged water, a hydrogen-reduced Pt(5 wt.%)-supported Ce-Zr-Oₓ powder (20 wt.% relative to said catalyst), an electrolyte solution (Nafion), ethanol, and propylene glycol to obtain a catalyst ink.
(5) After stirring the catalyst ink with a ultrasound homogenizer for 30 minutes, stirring was carried out using a magnetic stirrer for 15 minutes, and this process was repeated 3 times.
(6) The catalyst ink was cast on a teflon resin membrane (with a membrane thickness of 6 mil), which was then dried and cut into a 13-cm² section.
(7) The membrane section was hot-pressed on an electrolyte membrane to prepare an MEA.
(8) The MEA was assembled into a cell and then evaluated in the same way as in Example 1.

### (Comparative Example 4-1)

An electrode comprising a PtFe(60 wt.%)-supported carbon mixed with a Pt(5 wt.%)-supported Ce-Zr-Oₓ powder (20 wt.%) was prepared in accordance with the same procedure as in Example 4 except that Step (3) for hydrogen reduction was not performed.

### (Comparative Example 4-2)

A PtFe (60 wt.%)-supported carbon catalyst was used.

Table 3 below shows the composition of each catalyst. Table 4 shows the results of activity evaluation.

**Table 3**

| Data No. | Sample | Pt(A) | Fe | C | Nafion | Pt(B) | CeZrOₓ |
|---|---|---|---|---|---|---|---|
| Ex. 4 | PtFe(60wt%)+hydrogen-pretrea ted Pt(5wt%)/CeZrOₓ(20wt.%) | | | | | | |
| | N/C=1 | 19.3 | 1.6 | 33.8 | 33.8 | 0.5 | 10.9 |
| Com. Ex. 4-1 | PtFe(60wt%)+Pt(5wt%)/CeZrO, (20wt%) | | | | | | |
| | N/C=1 | 19.3 | 1.6 | 33.8 | 33.8 | 0.5 | 10.9 |
| Com. Ex. 4-2 | PtFe(60wt%) | | | | | | |
| | N/C=1 | 21.8 | 1.8 | 38.2 | 38.2 | 0.0 | 0.0 |

**Table 4**

| Data No. | Sample | Current density (A/cm²) | | | | | | | |
|---|---|---|---|---|---|---|---|---|---|
| | | 0 | 0.1 | 0.2 | 0.3 | 0.4 | 0.5 | 0.6 | 0.7 |
| Ex. 4 | PtFe(60wt%)+ hydrogen-pretreated Pt(5wt%)/CeZrOₓ(20 wt%) N/C=1 | Cell voltage (v) | | | | | | | |
| | | | | | | | | | |
| | | 0.977 | 0.913 | 0.885 | 0.843 | 0.788 | 0.672 | 0.328 | |
| Com. Ex. 4-1 | PtFe(60wt%)+Pt(5wt %)/CeZrOₓ(20wt%) | | | | | | | | |
| | N/C=1 | 0.974 | 0.897 | 0.862 | 0.834 | 0.784 | 0.685 | 0.400 | |
| Com. Ex. 4-2N/C=1 | PtFe(60wt%) | | | | | | | | |
| | | 0.961 | 0.881 | 0.839 | 0.797 | 0.758 | 0.716 | 0.662 | 0.481 |

The results shown in Table 4 indicate that higher battery performance (generation efficiency) can be obtained in the low-current density region when Ce₂O₃ obtained by pretreating a certain amount of CeO₂ by reduction is mixed with the electrode than when the oxygen absorbing/releasing material is simply mixed.

### [Example 5]

### (Example 5)

An electrode comprising a PtFe(60wt.%)-supported carbon catalyst mixed with a Pt(5wt.%)-supported Ce-Zr-Oₓ powder (20 wt.%) was prepared in the following procedure.
(1) A Ce-Zr-Oₓ complex oxide powder was immersed in an aqueous solution of dinitrodiamine Pt complex. The resultant was stirred and then evaporated to dryness at 120°C (Pt 5 wt.% relative to the powder).
(2) After grinding in a mortar, the powder was baked in an atmospheric baking furnace at 500°C for 2 hours, and the powder was again ground in a mortar.
(3) A commercially available PtFe(60 wt.%)-supported carbon catalyst was mixed with predetermined amounts of ion-exchanged water, a Pt(5 wt.%)-supported Ce-Zr-Oₓ powder (20 wt.% relative to the catalyst), an electrolyte solution (Nafion), ethanol, and propylene glycol to obtain a catalyst ink (the amount of Nafion was adjusted such that N/C = 0.75 (wt.%)).
(4) The catalyst ink was stirred with an ultrasound homogenizer for 30 minutes and then with a magnetic stirrer for 15 minutes. This process was repeated 3 times.
(5) The catalyst ink was cast on a teflon resin membrane (with a membrane thickness of 3 mil), which was then dried and cut into a 13-cm² section.
(6) The membrane section was hot-pressed onto an electrolyte membrane to prepare an MEA.
(7) The MEA was assembled into a cell and then evaluated in the same way as in Example 1.

### (Comparative Example 5-1)

An electrode where N/C = 1 comprising a PtFe(60 wt.%)-supported carbon catalyst mixed with a Pt 5(wt.%)-supported Ce-Zr-Oₓ powder (20 wt.%) was prepared.

### (Comparative Example 5-2)

An electrode where N/C = 0.5 comprising a PtFe(60 wt.%)-supported carbon catalyst mixed with a Pt(5 wt.%)-supported Ce-Zr-Oₓ powder (20 wt.%) was prepared.

### (Comparative Example 5-3)

A PtFe (60 wt.%)-supported carbon catalyst (N/C = 1) was used.

### (Comparative Example 5-4)

A Pt(60 wt.%)-supported carbon catalyst (N/C = 1) was used.

Table 5 below shows the composition of each catalyst. Table 6 shows the results of activity evaluation.

**Table 5**

| Data No. | Sample | Pt(A) | Fe | C | Nafion | Pt(B) | CeZrOₓ |
|---|---|---|---|---|---|---|---|
| Ex. 5 | PtFe(60wt%)+Pt(5wt%)/CeZr Oₓ(20wt%) | | | | | | |
| | N/C=0.75 | 21.1 | 1.8 | 36.9 | 27.7 | 0.6 | 12.0 |
| Com. Ex. 5-1 | PtFe(60wt%)+Pt(5wt%)/CeZr Oₓ(20wt%) | | | | | | |
| | N/C=1 | 19.3 | 1.6 | 33.8 | 33.8 | 0.5 | 10.9 |
| Com. Ex.5-2 | PtFe(60wt%) | | | | | | |
| | N/C=1 | 21.8 | 1.8 | 38.2 | 38.2 | 0.0 | 0.0 |
| Com. Ex.5-3 | PtFe(60wt%)+Pt(5wt%)/CeZr Oₓ(20wt%) | | | | | | |
| | N/C=0.50 | 23.2 | 2.0 | 40.7 | 20.3 | 0.7 | 13.2 |

**Table 6**

| Data No. | Sample | Current density (A/cm²) | | | | | | | |
|---|---|---|---|---|---|---|---|---|---|
| | | 0 | 0.1 | 0.2 | 0.3 | 0.4 | 0.5 | 0.6 | 0.7 |
| Ex. 5 | PtFe(60wt%)+Pt(5wt %)/CeZrOₓ(20wt%) | Cell voltage (V) | | | | | | | |
| | | | | | | | | | |
| | N/C=0.75 | 0.962 | 0.890 | 0.855 | 0.820 | 0.780 | 0.740 | 0.695 | 0.520 |
| Com. Ex. 5-1 | PtFe(60wt.%)+Pt(5w t%)/CeZrOₓ(20wt%) | | | | | | | | |
| | N/C=1 | 0.974 | 0.897 | 0.862 | 0.834 | 0.784 | 0.685 | 0.400 | |
| Com. Ex. 5-2 | PtFe(60wt%) | | | | | | | | |
| | N/C=I | 0.961 | 0.881 | 0.839 | 0.797 | 0.758 | 0.716 | 0.662 | 0.481 |
| Com. Ex. 5-3 | PtFe(60wt%)+Pt(5wt %)/CeZrOₓ(20wt%) | | | | | | | | |
| | N/C=0.50 | 0.960 | 0.880 | 0.830 | 0.790 | 0.760 | 0.720 | 0.690 | 0.638 |

The results shown in Table 6 indicate that flooding can be prevented and improved battery performance (generation efficiency) can be obtained throughout all current density regions by reducing the ratio of the amount of polymer electrolyte to the amount of the carrier (N/C) to be 0.8 or smaller.

### [Example 6]

### (Example 6)

An electrode comprising a PtFe (60 wt.%)-supported carbon catalyst (the carbon being hydrophobic) mixed with a Pt(5 wt.%)-supported Ce-Zr-Oₓ powder (20 wt.%) was prepared in the following procedure.

The carbon in the Pt (60 wt.%)-supported carbon catalyst in step (3) of Example 5 was substituted with hydrophobic carbon, and the value of N/C was 1.0. Regarding the PtFe catalyst, a hydrophilic functional group was introduced into carbon in order to allow for the addition of an acid-washing step.

### (Comparative Example 6-1)

An electrode where N/C = 1 comprising a PtFe(60 wt.%)-supported carbon catalyst mixed with a Pt 5(wt.%)-supported Ce-Zr-Oₓ powder (20 wt.%) was prepared.

### (Comparative Example 6-2)

An electrode where N/C = 0.5 comprising a PtFe(60 wt.%)-supported carbon catalyst mixed with a Pt(5 wt.%)-supported Ce-Zr-Oₓ powder (20 wt.%) was prepared.

### (Comparative Example 6-3)

A PtFe (60 wt.%)-supported carbon catalyst (N/C = 1) was used.

### (Comparative Example 6-4)

A Pt(60 wt.%)-supported carbon catalyst (N/C = 1) was used.

Table 7 below shows the composition of each catalyst. Table 8 shows the results of activity evaluation.

**Table 7**

| Data No. | Sample | Pt(A) | Fe | C | Nafion | Pt(B) | CeZrOₓ |
|---|---|---|---|---|---|---|---|
| Ex.6 | Pt(60wt%)+Pt(5wt%)/CeZrO ₓ(20wt%) | | | | | | |
| | N/C=1 | 20.4 | 0.0 | 34.1 | 34.1 | 0.5 | 10.9 |
| Com. Ex. 6-1 | PtFe(60wt%)+Pt(5wt%)/CeZ rOₓ(20wt%) | | | | | | |
| | N/C=1 | 19.3 | 1.6 | 33.8 | 33.8 | 0.5 | 10.9 |
| Com. Ex.6-2 | PtFe(60wt%) | | | | | | |
| | N/C=1 | 21.8 | 1.8 | 38.2 | 38-2 | 0.0 | 0.0 |
| Com. Ex. 6-3 | Pt(60wt%) | | | | | | |
| | N/C=1 | 23.1 | 0.0 | 38.5 | 38.5 | 0.0 | 0.0 |

**Table 8**

| Data No. | Sample | Current density (A/cm²) | | | | | | | |
|---|---|---|---|---|---|---|---|---|---|
| | | 0 | 0.1 | 0.2 | 0.3 | 0.4 | 0.5 | 0.6 | 0.7 |
| Ex. 6 | Pt(60wt%)+Pt(5wt%) /CeZrOₓ(20wt%) N/C=1 | Cell voltage (V) | | | | | | | |
| | | | | | | | | | |
| | | 0.962 | 0.890 | 0.855 | 0.820 | 0.790 | 0.710 | 0.661 | 0.520 |
| Com. Ex. 6-1 | PtFe(60wt%)+Pt(5wt %)/CeZrOₓ(20wt%) | | | | | | | | |
| | N/C=1 | 0.974 | 0.897 | 0.862 | 0.834 | 0.784 | 0.685 | 0.400 | |
| Com. Ex. 6-2 | PtFe(60wt%) | | | | | | | | |
| | N/C=1 | 0.961 | 0.881 | 0.839 | 0.797 | 0.758 | 0.716 | 0.662 | 0.481 |
| Com. Ex. 6-3N/C=1 | Pt(60wt%) | | | | | | | | |
| | | 0.960 | 0.850 | 0.800 | 0.760 | 0.725 | 0.700 | 0.685 | 0.650 |

The results shown in Table 8 indicate that flooding can be prevented and improved battery performance (generation efficiency) can be obtained throughout all current density regions by using carbon that has been treated to be hydrophobic as the carrier.

### [Example 7]

### (Example 7)

An electrode comprising a PtFe (60wt.%)-supported carbon catalyst mixed with a Pt(5 wt.%)-supported Ce-Zr-Oₓ powder (20 wt.%) was prepared in the following procedure.
(1) A Ce-Zr-Oₓ complex oxide powder was immersed in an aqueous solution of dinitrodiamine Pt complex. The resultant was stirred and then evaporated to dryness at 120°C (Pt 5 wt.% relative to the powder).
(2) After grinding in a mortar, the powder was baked in an atmospheric baking furnace at 500°C for 2 hours, and the powder was again ground in a mortar.
(3) A commercially available PtFe (60 wt.%)-supported carbon catalyst was mixed with predetermined amounts of ion-exchanged water, a hydrogen-reduced Pt(5 wt.%)-supported Ce-Zr-Oₓ powder (20 wt.% relative to the catalyst), an electrolyte solution (Nafion), ethanol, and propylene glycol to obtain a catalyst ink.
(4) The catalyst ink was stirred with an ultrasound homogenizer for 30 minutes and then with a magnetic stirrer for 15 minutes. This process was repeated 3 times.
(5) While bubbling an Ar gas into the catalyst ink (100 cc/min), the catalyst ink was vigorously stirred with a magnetic stirrer (600 rpm) for 30 minutes.
(6) The catalyst ink was cast on a teflon resin membrane (with a membrane thickness of 6 mil), which was then dried and cut into a 13-cm² section.
(7) The membrane section was hot-pressed onto an electrolyte membrane to prepare an MEA.
(8) The MEA was assembled into a cell and then evaluated in the same way as in Example 1.
(9) A cut-out piece was set on a nitrogen pore distribution apparatus and the pore volume was measured.

The pore volume of the catalyst layer due to the bubbling operation in step (5) measured by the nitrogen pore distribution method was 0.0080 cc/g. For evaluation of the pore volume, the catalyst layer (with the teflon resin membrane) after the casting and drying steps was cut out into a 30 cm² section that was further cut into 0.5 cm x 0.5 cm sections.

### (Comparative Example 7-1)

An electrode comprising a PtFe (60 wt.%)-supported carbon mixed with a Pt(5 wt.%)-supported Ce-Zr-Oₓ powder (20 wt.%) was used. This example corresponds to Example 7 except that step (5) was not performed. The pore volume was 0.0067 cc/g.

### (Comparative Example 7-2)

A PtFe (60 wt.%)-supported carbon catalyst was used. This example corresponds to Example 7-1 except that the Pt(5 wt.%)-supported Ce-Zr-Zₓ powder was not added. The pore volume was 0.0052 cc/g.

Table 9 below shows the composition of each catalyst. Table 10 shows the results of activity evaluation.

**Table 9**

| Data No. | Sample | Pt(A) | Fe | C | Nafion | Pt(B) | CeZrOₓ |
|---|---|---|---|---|---|---|---|
| Ex. 7 | PtFe(60wt%)+Pt(5wt%)/CeZr Oₓ(20wt%) | | | | | | |
| | N/C=1, pore volume 0.008 | 19.3 | 1.6 | 33.8 | 33.8 | 0.5 | 10.9 |
| Com. Ex. 7-1 | PtFe(60wt%)+Pt(5wt%)/CeZr Oₓ(20wt%) | | | | | | |
| | N/C=1, pore volume 0.0067 | 19.3 | 1.6 | 33.8 | 33.8 | 0.5 | 10.9 |
| Com. Ex. 7-2 | PtFe(60wt%) | | | | | | |
| | N/C=1, pore volume 0.0052 | 21.8 | 1.8 | 38.2 | 38.2 | 0.0 | 0.0 |

**Table 10**

| Data No. | Sample | Current density (A/cm²) | | | | | | | |
|---|---|---|---|---|---|---|---|---|---|
| | | 0 | 0.1 | 0.2 | 0.3 | 0.4 | 0.5 | 0.6 | 0.7 |
| Ex. 7 | PtFe(60wt%)+Pt(5 wt%)/CeZrOₓ(20w t%) | Cell voltage (V) | | | | | | | |
| | | | | | | | | | |
| | N/C=1, pore volume 0.008 | 0.974 | 0.920 | 0.890 | 0.860 | 0.810 | 0.760 | 0.690 | 0.500 |
| Com. Ex. 7-1 | PtFe(60wt%)+Pt(5 wt%)/CeZrOₓ(20w t%) | | | | | | | | |
| | N/C=1, pore volume 0.0067 | 0.974 | 0.897 | 0.862 | 0.834 | 0.784 | 0.685 | 0.400 | |
| Com. Ex. 7-2 | PtFe(60wt%) | | | | | | | | |
| | N/C=1, pore volume 0.0052 | 0.961 | 0.881 | 0.839 | 0.797 | 0.758 | 0.716 | 0.662 | 0.481 |

The results shown in Table 10 indicate that improved battery performance (generation efficiency) can be obtained throughout all current density regions by increasing the pore volume by subjecting the catalyst layer to a hole-increasing treatment.

### [Example 8]

### (Example 8)

A cathode electrode comprising a PtFe(60 wt.%)-supported carbon catalyst was prepared in accordance with the following procedure, in which a Pt(5 wt.%)-supported Ce-Zr-Oₓ powder (20 wt.% relative to the catalyst) was disposed on the electrolyte membrane side in an inclined manner.
(1) A Ce-Zr-Oₓ complex oxide powder was immersed in an aqueous solution ofdinitrodiamine Pt complex, stirred, and then evaporated to dryness at 120°C (Pt 5 wt.% relative to the powder).
(2) After grinding in a mortar, the powder was baked in an atmospheric baking furnace at 500°C for 2 hours, and the powder was again ground in a mortar.
(3) To a commercially available PtFe (60 wt.%)-supported carbon catalyst, predetermined amounts of ion-exchanged water, a Pt(5 wt.%)-supported Ce-Zr-Oₓ powder, an electrolyte solution (Nafion), ethanol, and propylene glycol were mixed to obtain a catalyst ink.
(4) The catalyst ink was stirred with a ultrasound homogenizer for 30 minutes and then with a magnetic stirrer for 15 minutes. This process was repeated 3 times.
(5) The catalyst ink was cast on a teflon resin membrane (with a membrane thickness of 3 mil), which was then dried.
(6) A catalyst ink was similarly prepared in steps (3) and (4) in which the Pt(5 wt.%)-supported Ce-Zr-Oₓ powder was not contained. The catalyst ink was then cast on the membrane of step (5) to a membrane thickness of 3 mil and then dried. (Of the entire membrane thickness of 6 mil, the Pt 5(wt.%)-supported Ce-Zr-Y-Oₓ powder was 20 wt.% relative to the PtFe/C catalyst.)
(7) The thus dried membrane was cut into a 13-cm² section, which was then hot-pressed on an electrolyte membrane, thereby preparing an MEA.
(8) The MEA was assembled into a cell and evaluated in the same manner as in Example 1.

### (Comparative Example 8-1)

A cathode electrode comprising a PtFe (60 wt.%)-supported carbon catalyst was prepared in which a Pt(5 wt.%)-supported Ce-Zr-Ox powder (20 wt.% relative to the catalyst) was uniformly disposed in the catalyst layer in accordance with the same procedure as that of Example 8, except that the membrane thickness in the casting step (5) was 6 mil and step (6) was not performed.

### (Comparative Example 8-2)

An electrode with a membrane thickness of 6 mil was prepared using a PtFe (60 wt.%)-supported carbon catalyst. This corresponds to Comparative Example 8-1 except that the Pt(5 wt.%)-supported Ce-Zr-Y-Oₓ powder was not contained.

Table 11 below shows the composition of each catalyst. Table 12 shows the result of activity evaluation.

**Table 11**

| Data No. | Sample | Pt(A) | Fe | C | Nafion | Pt(B) | CeZrOₓ |
|---|---|---|---|---|---|---|---|
| Ex.8 | PtFe(60wt%)+Pt(5wt%) /CeZrOₓ(20wt%) | 19.3 | 1.6 | 33.8 | 33.8 | 0.5 | 10.9 |
| | N/C=1, membrane-side inclined arrangement | | | | | | |
| Com. Ex.8- 1 | PtFe(60wt%)+Pt(5wt%) /CeZrOₓ(20wt%) | 19.3 | 1.6 | 33.8 | 33.8 | 0.5 | 10.9 |
| | N/C=1, uniform arrangement | | | | | | |
| Com. Ex.8- 2 | PtFe(60wt%) | 21.8 | 1.8 | 38.2 | 38.2 | 0.0 | 0.0 |
| | N/C=1 | | | | | | |

**Table 12**

| Data No. | Sample | Current density (A/cm²) | | | | | | | |
|---|---|---|---|---|---|---|---|---|---|
| | | 0 | 0.1 | 0.2 | 0.3 | 0.4 | 0.5 | 0.6 | 0.7 |
| Ex.8 | PtFe(60wt%)+Pt(5wt %)/CeZrOₓ(20wt%) N/C=1, membrane-side inclined arrangement | Cell voltage (V) | | | | | | | |
| | | 0.974 | 0.915 | 0.870 | 0.820 | 0.775 | 0.725 | 0.680 | 0.500 |
| Com. Ex.8-1 | PtFe(60wt%)+Pt(5wt %)/CeZrOₓ(20wt%) | | | | | | | | |
| | N/C=1, uniform arrangement | 0.974 | 0.897 | 0.862 | 0.834 | 0.784 | 0.685 | 0.400 | |
| Com. Ex.8-2 | PtFe(60wt%) N/C=1 | 0.961 | 0.881 | 0.839 | 0.797 | 0.758 | 0.716 | 0.662 | 0.481 |

The results shown in Table 12 indicate that by providing a change in the arrangement of the oxygen absorbing/releasing material, excess oxygen fed from the outside can be trapped by the oxygen absorbing/releasing material on the electrolyte membrane side, and the trapped oxygen can be released and fed to the catalyst when the oxygen consumption at the catalyst increases. Thus, the oxygen utilization efficiency of the catalyst can be improved. In this way, flooding on the high-current density side can be prevented, and improved battery performance (generation efficiency) can be obtained throughout all current density regions.

### [Example 9]

### (Example 9)

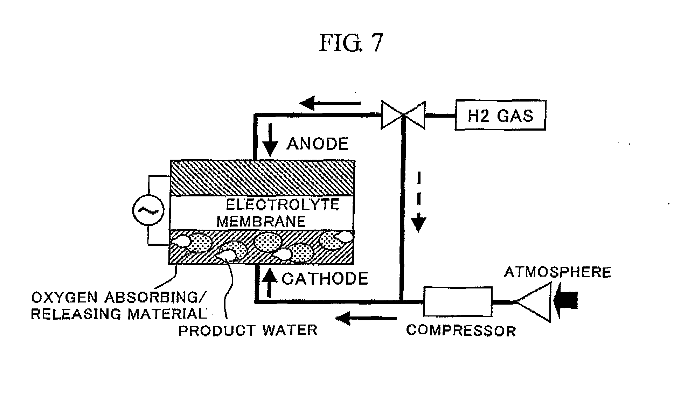

A system was constructed in the following procedure and as shown in Fig. 7 whereby, in a cathode electrode comprising a PtFe (60 wt.%)-supported carbon mixed with a Pt(5 wt.%)-supported Ce-Zr-Oₓ powder (20 wt.% relative to the catalyst), H2 can be distributed periodically before or during operation.
(1) A Ce-Zr-Oₓ complex oxide powder was immersed in an aqueous solution of dinitrodiamine Pt complex, stirred, and then evaporated to dryness at 120°C (Pt 5 wt.% relative to the powder).
(2) After grinding in a mortar, the powder was baked in an atmospheric baking furnace at 500°C for 2 hours, and the powder was again ground in a mortar.
(3) To a commercially available PtFe (60 wt.%)-supported carbon catalyst, predetermined amounts of ion-exchanged water, a Pt 5 wt.%-supported Ce-Zr-Oₓ powder (20 wt.% relative to the catalyst), an electrolyte solution (Nafion), ethanol, and propylene glycol were mixed to obtain a catalyst ink.
(4) The catalyst ink was stirred with a ultrasound homogenizer for 30 minutes and then with a magnetic stirrer for 15 minutes. This process was repeated 3 times.
(5) The catalyst ink was cast on a teflon resin membrane (to a membrane thickness of 6 mil), which was then dried and cut into a 13-cm² section.
(6) The membrane section was hot-pressed on an electrolyte membrane to prepare an MEA.
(7) The MEA was assembled into a cell.
(8) The cell was operated under the same basic operating conditions for the catalytic activity evaluation in Example 1 and was controlled by circulating 0.1 % of H₂ to the cathode for 5 seconds every 5 minutes in a mixed manner.

### (Comparative Example 9-1)

Using a cathode electrode comprising a PtFe (60 wt.%)-supported carbon catalyst mixed with a Pt(5 wt.%)-supported Ce-Zr-Oₓ powder (20 wt.% relative to said catalyst), normal operation was carried out. This corresponds to Example 9 except that the H₂-circulated control in step (8) was not performed.

### (Comparative Example 9-2)

Using a PtFe (60 wt.%)-supported carbon catalyst, normal operation was carried out. This corresponds to Comparative Example 9-1 except that the Pt (5 wt.%)-supported Ce-Zr-Oₓ powder was not added.

Table 13 below shows the composition of each catalyst. Table 14 shows the result of activity evaluation.

**Table 13**

| Data No. | Sample | Pt(A) | Fe | C | Nafion | Pt(B) | CeZrOₓ |
|---|---|---|---|---|---|---|---|
| Ex.9 | PtFe(60wt%)+Pt(5wt%)/Cezr Oₓ(20wt%) | | | | | | |
| | N/C=1, hydrogen circulation system | 19.3 | 1.6 | 33.8 | 33.8 | 0.5 | 10.9 |
| Com. Ex.9-1 | PtFe(60wt%)+Pt(5wt%)/CeZr Oₓ(20wt%) | | | | | | |
| | N/C=1 | 19.3 | 1.6 | 33.8 | 33.8 | 0.5 | 10.9 |
| Com. Ex.9-2 | PtFe(60wt%) | | | | | | |
| | N/C=1 | 21.8 | 1.8 | 38.2 | 38.2 | 0.0 | 0.0 |

**Table 14**

| Data No. | Sample | Current density (A/cm²) | | | | | | | |
|---|---|---|---|---|---|---|---|---|---|
| | | 0 | 0.1 | 0.2 | 0.3 | 0.4 | 0.5 | 0.6 | 0.7 |
| Ex.9 | | Cell voltage (V) | | | | | | | |
| | PtFe(60wt%)+Pt(5wt% )/CeZrOₓ(20wt%) | | | | | | | | |
| | N/C=1, hydrogen circulated system | 0.980 | 0.925 | 0.895 | 0.860 | 0.800 | 0.710 | 0.630 | 0.510 |
| Com. Ex.9-1 | PtFe(60wt%)+Pt(5wt% )/CeZrOₓ(20wt%) | | | | | | | | |
| | N/C=1 | 0.974 | 0.897 | 0.862 | 0.834 | 0.784 | 0.685 | 0.400 | |
| Com. Ex.9-2 | PtFe(60wt%) | | | | | | | | |
| | N/C=1 | 0.961 | 0.881 | 0.839 | 0.797 | 0.758 | 0.716 | 0.662 | 0.481 |

The results shown in Table 14 indicate that the battery performance (generation efficiency) on all current density regions can be improved by reducing some of the CeO₂ to Ce₂O₃, as compared with the case where the oxygen absorbing/releasing material is not periodically subjected to the reduction process before and/or during operation.

### Industrial Applicability

In accordance with the invention, due to the presence of an oxygen absorbing/releasing material in the catalyst layer of the fuel cell cathode that is in contact with the catalyst, high oxygen concentrations can be obtained in the vicinity of the electrode without being influenced by the gas diffusion in the catalyst layer, and enhanced battery performance can be obtained. Higher battery performance can be obtained particularly in the low-current density side than when no oxygen absorbing/releasing agent is used.

## Claims

1. A fuel cell cathode comprising a catalyst layer that comprises a catalyst-supporting electrically conductive carrier and a polymer electrolyte, wherein a catalyst is additionally supported by or mixed with said catalyst-supporting electrically conductive carrier, said catalyst being in contact with an oxygen absorbing/releasing material.

2. The fuel cell cathode according to claim 1, wherein said oxygen absorbing/releasing material is comprised of one or more of an oxidation-number-variable metal, a metal oxide, or a compound thereof, which absorbs or releases oxygen based on the change in oxidation number.

3. The fuel cell cathode according to claim 1, wherein said oxygen absorbing/releasing material is comprised of one or more of Zr, Y, an alkali metal, an oxide of alkaline earth metal, or a compound thereof, which absorbs or releases oxygen based on the adsorption of oxygen.

4. The fuel cell cathode according to claim 3, wherein said oxygen absorbing/releasing material is comprised of one or more of CeO₂, CeO₂-ZrO₂, CeO₂-ZrO₂-Y₂O₃, or CeO₂-ZrO₂-rare-earth oxide.

5. The fuel cell cathode according to any one of claims 1 to 4, wherein the amount of said oxygen absorbing/releasing material in said catalyst layer is 5 to 16 wt.% relative to the total amount.

6. The fuel cell cathode according to any one of claims 1 to 5, wherein the total amount of the catalyst supported by said catalyst layer is 30 wt.% or less thereof.

7. The fuel cc11 cathode according to any one of claims 1 to 6, wherein the average particle size of said oxygen absorbing/releasing material is 2 to 40 nm.

8. The fuel cell cathode according to any one of claims 4 to 7, wherein said oxygen absorbing/releasing material is comprised of one or more of CeO₂, CeO₂-ZrO₂, CeO₂-ZrO₂-Y₂O₃, CeO₂-ZrO₂-rare-earth oxide, of which CeO₂ has been partly reduced to Ce₂O₃.

9. The fuel cell cathode according to any one of claims 1 to 8, wherein the ratio of the amount of said polymer electrolyte to the amount of said carrier in said catalyst layer is 0.8 to 1 or less.

10. The fuel cell cathode according to any one of claims 1 to 9, wherein said carrier is comprised of carbon that has been treated to be hydrophobic.

11. The fuel cell cathode according to any one of claims 1 to 10, wherein the pore volume of said catalyst layer is increased by treating a catalyst ink, of which said catalyst layer is made, such that the number of pores therein is increased.

12. The fuel cell cathode according to any one of claims 1 to 11, wherein more of said oxygen absorbing/releasing material is contained towards the electrolyte membrane side in said catalyst layer than towards the diffusion layer side, and wherein less of said oxygen absorbing/releasing material is contained towards the diffusion layer side than towards the electrolyte membrane side, or none at all is contained in such location.

13. A polymer electrolyte fuel cell comprising an anode, a cathode, and a polymer electrolyte membrane disposed between said anode and said cathode, said cathode comprising the fuel cell cathode according to any one of claims I to 12.

14. A method of operating a polymer electrolyte fuel cell comprising an anode, a cathode, and a polymer electrolyte membrane disposed between said anode and said cathode, wherein said cathode comprises the fuel cell cathode according to any one of claims 4 to 12, said method comprising feeding hydrogen gas to said oxygen absorbing/releasing material, which is comprised of one or more of CeO₂, CeO₂-ZrO₂, CeO₂-ZrO₂-Y₂O₃, or CeO₂-ZrO₂-rare-earth oxide, periodically in a pulsed manner before or during operation so as to treat CeO₂ to be partly reduced to CeO₃.
